**Europäisches Patentamt**

**European Patent Office**

**Office européen des brevets**

(19)

(11) Veröffentlichungsnummer : **0 398 871 B1**

(12) ## EUROPÄISCHE PATENTSCHRIFT

(45) Veröffentlichungstag der Patentschrift :
**23.09.92 Patentblatt 92/39**

(51) Int. Cl.$^5$ : **B23K 35/363**

(21) Anmeldenummer : **88901033.6**

(22) Anmeldetag : **12.01.88**

(86) Internationale Anmeldenummer :
**PCT/EP88/00017**

(87) Internationale Veröffentlichungsnummer :
**WO 89/06584 27.07.89 Gazette 89/16**

(54) VERFAHREN ZUR HERSTELLUNG VON ELEKTRONISCHEN KOMPONENTEN UNTER VERWENDUNG EINES WEICHLÖTFLUSSMITTELS AUF CARBONSÄUREBASIS.

(43) Veröffentlichungstag der Anmeldung :
**28.11.90 Patentblatt 90/48**

(45) Bekanntmachung des Hinweises auf die
Patenterteilung :
**23.09.92 Patentblatt 92/39**

(84) Benannte Vertragsstaaten :
**AT BE CH DE FR GB IT LI LU NL SE**

(56) Entgegenhaltungen :
**WO-A-50/5307**
**WO-A-60/0844**
**DE-A- 2 114 927**
**FR-A- 2 109 689**

(73) Patentinhaber : **KERNER, Rudolf A.**
**Josef-Kreitmeir-Strasse 12**
**W-8893 Tandern (DE)**

(72) Erfinder : **KERNER, Rudolf A.**
**Josef-Kreitmeir-Strasse 12**
**W-8893 Tandern (DE)**

EP 0 398 871 B1

## Beschreibung

Die Erfindung betrifft ein Verfahren zur Herstellung von elektrischen und elektronischen Komponenten, insbesondere von mit Bauelementen bestückten gedruckten Schaltungen durch Weichlöten mittels Lötmaschinen unter Verwendung eines Weichlötflussmittels auf Carbonsäurebasis, das in der Elektronik- und Elektroindustrie eingesetzt wird.

Weichlötflussmittel auf der Basis von organischen Carbonsäuren sind bekannt. In Bezug auf die Beschreibung der Entwicklung dieser Technologie wird verwiesen auf die PS EP 0 215 773.

Es zeigte jedoch die vermehrte Einführung von in-circuit-Tests und SMT-manufacturing, daß ein Flussmittel hierzu erforderlich ist, dessen Rückstände nach dem Lötprozess nicht mehr entfernt werden zu brauchen und trotzdem bei den beiden vorbeschriebenen Fertungstechnologien einwandfreie Produktionsergebnisse erziehlt werden. Dies wird vorallendingen mit Flussmitteln erreicht, deren Feststoffanteil gegenüber den bisher üblichen deutlich vermindert ist. Die Verminderung des Feststoffanteils wird vorzugsweise dadurch erreicht, daß der Harzanteil entweder deutlich vermindert, ganz weggelassen oder durch andere substituierende Produkte ersetzt wird. Es wird hierbei Bezug genommen auf die PS DE 211497, DE 2832317, DE 1608425, DE 2725 701, EP 0184825, EP 090960, EP 0077622, EP 0201150, EP 0219 175 bzw. US 4,419,146.

Bei einer deutlichen Reduzierung des Feststoffanteils unter Verminderung bzw. Weglassung des Harzanteils vermindert sich aber entsprechend die Ausbreitungs- bzw. die Schäumfäbigkeit des Flussmittels. Diesem physikalischen Negativeffekt wurde bisher entgegenzuwirken versucht, in dem man als Ausbreitungs-bzw. Schäumkomponente Tenside (z.B. nichtionische, anionische, kationische, amphotere etc.) beigab. Doch es zeigte sich bei allen diesen Zuschlagstoffen ausnahmslos eine mangelnde elektrochemische Dauerzeitstand festigkeit.

Ferner zeigte der Lötdampf, also die nach dem Löten von gedruckten Schaltungen bis zur Abkühlung abdampfenden heissen Flussmittelrückstände, durch das Fehlen des abmildernden Harzes eine etwas zu starke physiologische Aktivität. Es war also wünschenswert, einen gleichwertigen Ersatz für die im wesentlichen für die physiologischen Reaktionen verantwortliche Bernsteinsäure zu finden.

Wenn ein halogenfreies Flussmittel ganz ohne Trägerkomponente, also z.B. ohne Harz aufgebaut wird (z.B. wie in PS EP 090960 beschrieben), so entsteht aufgrund der kristallinen Natur der Carbonsäuren ein optisch unattraktives weisses kristallines Rückstandsbild des Flussmittels nach dem Löten. Dies wird (wie bisher auch) verhindert durch Hinzugabe von einer jetzt aber deutlich verminderten Menge an Harz (siehe auch PS EP 0184825).

Im Lichte der vorgehend beschriebenen Erfordernisse ergibt sich für ein Flussmittel, das, ohne daß die Rückstände nach dem Löten entfernt zu werden brauchen, für den in-circuit-Test und für SMT-manufacturing geeignet ist, ein optimaler Feststoffanteil von 6 %. Es ist aber eder andere Feststoffanteil auch möglich.

Mit dem nachfolgend beschriebenen neuartigen Weichlötflussmittel, das auf der PS EP 0215773 fusst, lassen sich die genannten elektrochemischen Langzeit- und produktionstechnischen Erfordernisse erreichen.

Es zeigt sich auch hierbei, daß die Verwendung von alicyclischen Carbonsäuren die wesentliche Grundlage unter Hinzunahme von alkylfluorierten Alkoholen der chemischen Strukturformel $Rf-CH_2-CH_2-OH$, wobei Rf einen Fluoralkylrest von 6 bis 16 C-Atomen darstellt, für die Erreichung elektrochemischer Langzeitstabilität ist. Bei den alkylfluorierten Alkoholen ist ausnahmslos jede Art von Kettenschnitt geeignet. Als geeignetes Substitutionsprodukt für die Bernsteinsäure erwiesen sich die aliphatischen Hydroxy-Carbonsäuren. Die Verwendung von Hydroxy-Carbonsäuren als Flussmittelaktivatoren ist bekannt (z.B. PS DE 2344493, CH 461226, PCT SE 8500291). Es werden jedoch ausschliesslich für halogenhaltige Flussmittel insbesondere Zitronensäure, die korrosiv wirkt und thermisch instabil ist, sowie die Weinsäure, die praktisch in herkömmlichen Lösemitteln unlöslich ist, verwendet. Als besonders geeignet für halogenfreie Weichlötflussmittel, deren Rückstände nach dem Löten auf den gedruckten Schaltungen verbleiben können, zeigt sich die Äpfelsäure. Natürlich ist nachwievor auch die Bernsteinsäure selbst als bewährter Aktivatorzusatz sehr geeignet. Es wird deshalb bei den Beispielen auch hierzu wieder Bezug genommen.

Überraschenderweise zeigte sich auch bei Verwendung des Reagens alicyclische Carbonsäure - alkylfluorierter Alkohol des Typs $Rf-CH_2-CH_2-OH$ eine Geeignetheit von aromatischen Carbonsäuren. Insbesondere mehrkernige Verbindungen zeigten sich als geeignet. Auch hydroxylierte Verbindungen sind geeignet. Beispiele für mehrkernige aromatische Carbonsäuren sind Naphtalindicarbonsäure, Naphtalintetracarbonsäure etc. Beispiele für aromatische Hydroxy-Carbonsäuren sind Salicyl-, Hydroxy-Naphtoesäure, Hydroxy-Phenylessigsäure etc. Es ist somit jede aromatische Carbonsäure oder deren Derivate geeignet, sofern sie nicht im Aktivatorgemisch bei Beaufschlagung von Temperatur, Licht oder Spannung einer thermischen, optischen oder elektrochemischen Umwandlung unterliegt, die für Funktion von elektronischen Komponenten bedeutsam sein könnte.

Die Hinzunahme von alkylfluorierten Alkoholen des Typs $Rf-CH_2-CH_2-OH$, die kein tensidisches Reagens sind, ist natürlich auch für jede sich aus der PS EP 0215773 ergebende Rezepturzusammensetzung möglich. Die Flussmittel können auch mit mehrwertigen modifizierten Alkoholen anstelle von Harz aufgebaut werden.

Mit der Erfindung können Flussmittel für verschiedene Applikationsverfahren aufgebaut werden. Alle nachfolgenden Prozentangaben beziehen sich (soweit nicht anders angegeben) als Gewichtsprozente auf die Gesamtzusammensetzung.

a) Flüssigflussmittel

Die Anwendung erfolgt vorzugsweise bei automatischen Fließlötverfahren, wobei die Applikation auf die gedruckten Schaltungen mittels Schaum, Sprayen oder ähnlichem geschieht.

Hierbei ist das Harz (Anspruch 4 a) in einer Menge von 0,01 - 35 % enthalten. Die geeigneten Harzorten sind in der PS EP 0215773 vorbeschrieben.

Die mehrwertigen modifizierten Alkohole mit 2 - 16 C-Atomen Anspruch 4 b), deren Isomeren und Derivate, insbesondere deren Ester, Ether- und Oxoverbindungen sind mit 0,01 - 90 % enthalten. Die Beispiele sind in der PS EP 0215773 vorbeschrieben.

Die nachfolgenden Bestandteile des Aktivatorsystems (Anspruch 3) sind entweder mit 0,01 - 25 % oder mit 0 % enthalten.

Alicyclische Mono, Di- bzw. Polycarbonsäuren mit mindestens einem Kohlenstoffring (Anspruch 3 a) oder deren Derivate. Die geeigneten alicyclischen Carbonsäuren sind in der PS EP 0215773 vorbeschrieben.

Gesättigte aliphatische Monocarbonsäuren mit 14 - 22 C-Atomen (Anspruch 3 b). Beispiele für geeignete Säuren sind in der PS EP 0215773 vorbeschrieben.

Gesättigte aliphatische Dicarbonsäuren mit 2 - 10 C-Atomen und Polycarbonsäuren (Anspruch 3 c). Beispiele für geeignete Säuren sind in der PS EP 0215773 vorbeschrieben.

Aliphatische Ketocarbonsäuren mit 3 - 5 C-Atomen (Anspruch 3 d). Beispiele für geeignete Säuren sind in der PS EP 0215 773 vorbeschrieben.

Aliphatische Hydroxy-Carbonsäuren mit 3 - 5 C-Atomen (Anspruch 3 e). Beispiele für geeignete Säuren sind Tartron-, Äpfel-, Wein- und Zitronensäure, wobei die Äpfelsäure besonders bevorzugt ist.

Aromatische Mono-, Di- bzw. Polycarbonsäuren mit mindestens einem Kohlenstoffring und deren Derivate (Anspruch 3 f). Beispiele für geeignete Säuren sind Benzoe-, Salicyl-, Gallus-Phenylessig-, Mandel- und Zimtsäure, Phtal-, Terephtal-, Prohnit-, Mellophan-, Pyromellith- und Mellithsäure, Naphtalindi- und Tetracarbonsäure, Hxdroxy-Naphtoesäure etc. Besonders bevorzugt sind Salicyl-, Naphtalindi- und Naphatlintetracarbonsäure, Hydroxy-Naphtoesäure.

Quartäre Ammoniumsalze mit 4 - 19 C-Atomen (Anspruch 3 g). Beispiele für ein geeignetes Salz sind in der PS EP 0215773 vorbeschrieben.

Das Wasser ist mit 0,01 - 25 % enthalten (Anspruch 5 a). Die alkylfluorierten Alkohole der chemischen Strukturformel Rf-CH$_2$-CH$_2$-OH, wobei Rf einen Fluoralkylrest von 6 - 16 C-Atomen darstellt, sind mit 0,01 - 4 % enthalten (Anspruch 5 b). Es ist ausnahmslos jede Art von Fluoralkylresten besonders geeignet. Besonders bevorzugt sind Fluoralkyreste mit 6 - 12 C-Atomen.

Die mit Wasser mischbaren Alkanole oder deren Isomeren mit 2 - 5 C-Atomen (Anspruck 5 c) sind als Rest zu jeweils 100 % der jeweiligen Flussmittelmischung enthalten. Beispiele für geeignete Alkanole sind in der PS EP 0215773 vorbeschrieben.

Mit der Dispergierung von feinteiligem Lot in das Flussmittelsystem kann auch eine Lotpaste erhalten werden (Anspruch 6).

b) Festflussmitel

Ein derartiges Produkt kann zur Umhüllung von Lotformteilen oder als Füllung von Lotdrähten verwendet werden (Anspruch 7). Für diese Anwendungen entfallen die Komponenten gemäss Anspruch 5 a und 5 c.

Die nachfolgenden Beispile erläutern die Erfindung.

1. Beispiel

Flüssigflussmittel für automatisches Fliesslötverfahren.

| | |
|---|---|
| WW Gum Rosin | 2,4 |
| Isopropanol | 88,0 |
| Wasser | 6,0 |
| Alkylfluorierter Alkohol | 0,3 |
| Cyclohexan-Dicarbonsäure | 0,7 |
| **Bernsteinsäure** | 1,4 |
| Stearinsäure | 1,0 |
| Lävulinsäure | 0,3 |

2. Beispiel

Flüssigflussmittel für automatische Fliesslötverfahren, das besonders geeignet ist für Anwendungen im Konsumelektronikbereich

| | |
|---|---|
| WW Gum Rosin | 2,1 |
| Isopropanol | 88,0 |
| Wasser | 6,0 |
| Alkylfluorierter Alkohol | 0,3 |
| Cyclohexan-Dicarbonsäure | 0,7 |
| Adipinsäure | 0,3 |
| Äpfelsäure | 2,3 |
| Tetramethylammoniumbromid | 0,3 |

3. Beispiel

Flüssigflussmittel für automatisches Fliesslötverfahren, dessen Rückstände mit Wasser nach dem Lötprozeß wieder entfernt werden können.

| | |
|---|---|
| Isopropanol | 60,0 |
| Modifizierter **mehrwertiger** Alkohol | 19,0 |
| Wasser | 7,0 |
| Alkylfluorierter Alkohol | 0,3 |
| Glycol | 9,0 |
| Glutarsäure | 1,4 |
| Adipinsäure | 0,3 |
| **Cyclohexan** -Dicarbonsäure | 2,0 |

4. Beispiel

Füllung für Lotdrähte oder zur Umhüllung eines Lotformteiles

4

EP 0 398 871 B1

| | |
|---|---|
| Hydriertes Baumharz | 84,5 |
| Alkylfluorierter Alkohol | 0,3 |
| Cyclohexan-Monocarbonsäure | 3,6 |
| Bernsteinsäure | 1,4 |
| Stearinsäure | 10,0 |
| Naphtalindicarbonsäure | 0.2 |

Sämtliche Flussmittelmischungen entsprechen in Bezug auf Korrosion und Oberflächenwiderstand gemäss DIN 8516 und DIN 8527 allen Tests für halogenfreies Flussmittel.

**Patentansprüche**

1. Verfahren zur Herstellung von elektrischen und elektronischen Komponenten, insbesondere von mit Bauelementen bestückten gedruckten Schaltungen durch Weichlöten mittels Lötmaschinen unter Verwendung eines Weichlötflussmittels auf der Basis von organischen Carbonsäuren, dadurch gekennzeichnet, dass das Weichlötflussmittel im Lösemittelsystem als Bestandteil alkylfluorierte Alkohole enthält.

2. Verfahren nach Anspruch 1, gekennzeichnet dadurch, dass das Weichlötflussmittel aus drei Bestandteilen besteht und zwar aus einem a) Aktivator-, b) Träger- und c) Lösemittelsystem.

3. Verfahren nach Anspruch 2, gekennzeichnet dadurch, dass, in Gewichtsprozent bezogen auf die Gesamtzusammensetzung, das Aktivatorsystem aus jeweils 0,01 - 25 %
   a) mindestens einer alicyclischen Mono-, Di- oder Polycarbonsäure mit mindestens einem Kohlenstoffring bzw. deren Derivate,
   b) mindestens einer gesättigten aliphatischen Monocarbonsäure mit 12 - 22 C-Atomen,
   c) mindestens einer gesättigten aliphatischen Dicarbonsäure, mit 2-10 C-Atomen
   d) mindestens einer aliphatischen Ketocarbonsäure mit 3 - 5 C-Atomen,
   e) mindestens einer aliphatischen Hydroxy-Carbonsäure mit 3 - 5 C-Atomen,
   f) mindestens einer aromatischen Mono-, Di- oder Polycarbonsäure mit mindestens einem Kohlenstoffring oder deren Derivate,
   g) mindestens einem quartärem Ammoniumsalz mit 4 - 19 C-Atomen
   besteht, wobei die Mengen von b), d), e), f) und g) auch 0 sein können.

4. Verfahren nach Anspruch 2, gekennzeichnet dadurch, dass in Gewichtsprozent bezogen auf die Gesamtzusammensetzung, das Trägersystem entweder aus
   a) 0,01 - 35 % einem natürlichen oder einem modifizierten natürlichen Baumharz oder einem Kunstharz oder Mischungen hiervon und/oder aus
   b) 0,01 - 90 % mehrwertigen modifizierten Alkoholen mit 2 -16 C-Atomen und/oder deren Derivaten besteht.

5. Verfahren nach Anspruch 2, gekennzeichnte dadurch, dass in Gewichtsprozent bezogen auf die Gesamtzusammensetzung, das Lösemittelsystem aus
   a) 0,01 - 25 % Wasser
   b) 0,01 - 4 % alkylfluoriertem Alkohol der Strukturformel $Rf-CH_2-CH_2-OH$, wobei Rf einen Fluoralkylrest mit 6 - 16 C-Atomen darstellt (mindestens ein).
   c) mindestens einem mit Wasser mischbaren Alkanol mit 2 - 5 C-Atomen oder deren Isomer, das als Rest zu jeweils 100 % verwendet wird,
   besteht.

6. Verfahren nach Anspruch 1, gekennzeichnet dadurch, dass das Weichlötflussmittel einen zusätzlichen Gehalt an feinteiligem Lot aufweist.

7. Verfahren nach Anspruch 1, gekennzeichnet dadurch, dass das Weichlötflussmittel zur Umhüllung von Lotformteilen oder als Füllung von Lotdrähten verwendet wird.

## Claims

1. A process for the manufacturing of electrical and electronic components, particularly printed circuits equipped with components, by soft soldering performed with soft soldering machines and the application of a soft soldering flux containing carboxylic acid and characterized by the fact that the soft soldering flux contains alcyl fluoric alcohols.

2. A process which in conformity with claim 1 is characterized by the fact that the soft soldering flux basically consists of three constituents, namely a) activator system, b) a vehicle system and c) a solvent system.

3. A process which in compliance with claim 2 is characterized by the fact that the activator system consists of the following components each of which is present in the amount of 0.1 to 25 % by weight of the total composition consists of:
   a) at least one alicyclic mono-,di- or polycarboxylic acid having at least one carbon ring, or their derivatives;
   b) at least one aliphatic monocarboxilic acid having 12 to 22 carbon atoms;
   c) at least one saturated aliphatic dicarboxylic acid,having 2 to 10 carbon atoms
   d) at least one aliphatic ketocarboxylic acid having 3 to 5 carbon atoms;
   e) at least one aliphatic hydroxycarboxylic acid with 3 - 5 carbon atoms;
   f) at least one aromatic mono-, di- or polycarboxylic acid containing at least respectively, one carbon ring or their derivatives;
   g) at least one quatenary ammonium salt with 4 to 19 carbon atoms;
   whereby the amounts for b), d), e), f) and g), however, may also equal 0.

4. A process which in conformity with claim 2, is characterized by the fact that the vehicle system ,in percent by weight of the total composition ,consists of the following:
   a) 0.01 to 36 % of a natural resin from trees, or of a modified natural resin from trees or of a synthetic resin or a mixture thereof and/or
   b) 0.01 to 90 % modified polyhydric alcohols with 2 to 16 carbon atoms or their derivatives.

5. A process which In compliance with claim 2, is characterized by the fact that the solvent system, in percent by weight of the total composition, consists of the following:
   a) 0.01 to 25 % water
   b) 0.01 to 4 % alcyl fluoric alcohol of the structural formula $Rf-Ch_2 - Ch_2-OH$, whereby Rf represents a fluoralcylicrest having 6 to 16 carbon atoms. (at least one).
   c) at least one alkanol with 2 to 5 carbon atoms and is miscible with water, or an isomere thereof, as a balance to 100 %

6. A process which in compliance with claim 1, Is characterized by the fact that the soft soldering flux contains in addition finely divided solder.

7. A process which in compliance with claim 1, is characterized by the fact that the soft soldering flux can be used as a cover for solder moulds or as a filler in solder wire.


## Revendications

1. Procédé de fabrication de composants électriques et électroniques, particulièrement pour les circuits imprimés rentrant dans des éléments de construction réalisés par soudure à l'étain au moyen de machines à braser avec utilisation d'un produit décapant pour soudure à l'étain ayant comme base des acides carboniques organiques caractérisés par le fait que le produit décapant contient dans le système de solvants des alcools alcoyle fluorés.

2. Procédé selon revendication 1, caractérisé par le fait que le produit décapant se compose de trois éléments dont a) un activateur, b) un support et c) und système de solvants.

3. Procédé selon revendication 2 caractérisé par le fait que, dans le pourcentage du oids par rapport à la composition totale, le système d'activateurs se compose respectivement de 0,01 - 25%
   a) au moins d'un mono-acide, di-acide ou poly-acide carbonique alicyclique avec au moins un anneau de carbone ou ses dérivés,

b) au moins d'un acide monocarbonique saturé aliphatique avec 12 à 22 atomes de C,

c) au moins d'un acide di-carbonique saturé aliphatique avec 2 à 10 atomes de C,

d) au moins d'un acide carbonique aliphatique avec 3 à 5 atomes de C,

e) au moins d'un acide hydroxy-carbonique aliphatique avec avec 3 à 5 atomes de C,

f) au moins d'un mono-acide, di-acide ou poly-acide de carbone aromatique avec au moins un anneau de carbone ou ses dérivés,

g) au moins d'un sel d'ammoniun quaternaire avec 4 à 9 atomes de C

tout en sachant que les quantités b), d), e), f) et g) peuvent aussi être égales à 0.

4. Procédé selon revendication 2, caractérisé par le fait que, dans le pourcentage du poids par rapport à la composition totale, le système de support se compose soit de

a) 0,01 - 35% d'une résine naturelle ou naturelle modifiée ou d'un résine artificielle ou d'un mélange des deux et/ou

b) 0,01 - 90% d'alcools modifiés polyvalents avec 2 à 16 atomes de C et/ou ses dérivés.

5. Procédé selon revendication 2, caractérisé par le fait que, dans le pourcentage du poids par rapport à la composition totale, le système de solvants se compose de

a) 0,01 - 25% d'eau

b) 0,01 - 4% d'alcool alcoyle fluoré de la formule $Rf\text{-}CH_2\text{-}CH_2\text{-}OH$, dont Rf représente un reste d'alcoyle fluoré avec 6 à 16 atomes de C (au moins un),

c) au moins un alkanol miscible à l'eau avec 2 à 5 atomes de C ou son isomère utilisé à 100% comme reste.

6. Procédé selon revendication 1, caractérisé par le fait que le produit décapant présente une teneur supplémentaire en fines particules d'étain à souder.

7. Procédé selon revendication 1, caractérisé par le fait que le produit décapant est utilisé pour enrober les pièces de brasage ou pur remplir les fils de brasage.